# FASCICULE DE BREVET EUROPEEN

(11) **EP 3 143 601 B1**
(45) Date de publication et mention de la délivrance du brevet: **24.04.2019**
(21) Numéro de dépôt: 15724211.6
(22) Date de dépôt: 15.05.2015
(51) Int. Cl.: G07B 15/06

(54) **DISPOSITIF DE CONTRÔLE DES DONNÉES PORTÉES PAR UN ÉQUIPEMENT EMBARQUÉ**
DATENÜBERPRÜFUNGSVORRICHTUNG FÜR DATEN IN EINER ON-BOARD-EINHEIT
DATA CHECKING UNIT FOR DATA IN AN ON BOARD UNIT

(30) Priorité: 16.05.2014 FR 1401114
(43) Date de publication de la demande: 22.03.2017
(73) Titulaire: Revenue Collection Systems France SAS, 91220 Plessis-Pâté (FR)
(72) Inventeur: BRAS, Pascal, F-91229 Bretigny-sur-Orge Cedex (FR)
(74) Mandataire: Lavoix
(86) Numéro de dépôt international: PCT/EP2015/060780
(87) Numéro de publication internationale: WO 2015/173404

(56) Documents cités:
- US-A1- 2004 094 621
- US-A1- 2006 044 161
- US-A1- 2006 054 680
- US-A1- 2010 085 213
- US-B1- 6 191 705

## Description

La présente invention concerne un dispositif de contrôle pour contrôler les données portées par un équipement, embarqué à bord d'un véhicule, d'un système de collecte de taxe, le dispositif de contrôle comprenant un système de communication sans fils pour lire des données portées par l'équipement embarqué, un calculateur principal pour interpréter les données lues, et un afficheur pour afficher les données interprétées.

L'invention concerne également un système de collecte de taxe comprenant un tel dispositif de contrôle, et un procédé de contrôle de données portées par un équipement, embarqué à bord d'un véhicule, d'un système de collecte de taxe.

Il est de pratique courante que les usagers d'un réseau routier soient assujettis à une taxe pour l'utilisation de ce réseau. Cette taxe est généralement destinée à couvrir les frais de construction et d'entretien du réseau routier. Il arrive exceptionnellement qu'elle soit destinée à couvrir d'autres frais occasionnés par la circulation de véhicules sur le réseau routier, comme les dommages environnementaux causés par cette circulation. La taxe à laquelle est assujetti l'usager dépend généralement de la classe de véhicules à laquelle appartient le véhicule qu'il conduit.

La taxe est collectée au moyen d'un système dit de péage. Ce système comprend le plus souvent des portiques de péage à l'entrée et à la sortie du réseau routier, afin de détecter l'entrée d'un véhicule sur le réseau routier et sa sortie du réseau routier. Des opérateurs contrôlent les usagers à leur sortie du réseau routier, et leur demandent de régler un montant de taxe qui est fonction de leur point d'entrée sur le réseau et de la classe de véhicule qu'ils conduisent.

Dans un souci d'automatisation du système de prélèvement de taxe, les véhicules de certaines classes de véhicules ont été équipés d'équipements embarqués pour le prélèvement de la taxe. Ces équipements embarqués sont équipés d'un système de géolocalisation permettant de déterminer le nombre de kilomètres parcourus par le véhicule sur le réseau routier auquel s'applique la taxe. Ces équipements embarqués stockent également des informations sur le véhicule permettant de déterminer la classe de véhicules à laquelle ce véhicule appartient. Les informations relatives au véhicule et à ses déplacements sur le réseau routier sont utilisées pour le calcul du montant de taxe dû par l'usager. Il est ainsi possible de se dispenser de l'installation de portiques de péage aux entrées et aux sorties du réseau routier.

Toutefois, les risques de fraude sont importants, l'usager pouvant retirer l'équipement embarqué de son véhicule, ou modifier les informations relatives au véhicule enregistrées dans l'équipement embarqué. Afin de prévenir ces risques de fraude, les systèmes de péage automatiques du type précité sont équipés d'un système de lutte contre la fraude. Ce système de lutte comprend généralement des portiques et des bornes de contrôle automatique, répartis le long du réseau routier et adaptés pour comparer les données relatives au véhicule stockées dans l'équipement embarqué avec les données réelles relatives au véhicule. Ce système de lutte comprend également le plus souvent des dispositifs de contrôle manuels et embarqués, adaptés pour permettre le contrôle des véhicules par des opérateurs à pied ou en voiture.

Ces dispositifs de contrôle manuel comprennent habituellement, dans un même boîtier, un système de communication sans fils pour lire les données portées par l'équipement embarqué, un calculateur principal pour interpréter les données lues, et un afficheur pour afficher les données interprétées.

Ces dispositifs de contrôle présentent l'inconvénient d'être lourds et encombrants, rendant leur utilisation fastidieuse pour les opérateurs et peu commode en cas de situation exceptionnelle, comme en cas d'agression ou de poursuite d'un contrevenant. Ils sont de plus peu évolutifs.

Par ailleurs, les opérateurs utilisant à la fois des dispositifs de contrôle manuels et des dispositifs de contrôle embarqués se retrouvent à devoir s'adapter aux interfaces de deux dispositifs différents, et à devoir gérer les données relatives à leurs contrôles dans deux bases de données différentes.

Le document US 2004/0094621 A1 divulgue un dispositif de contrôle selon le préambule de la revendication 1.

Un objectif de l'invention est de faciliter la manipulation des dispositifs de contrôle manuels par les opérateurs. Un autre objectif est de rendre ces dispositifs de contrôle manuels plus évolutifs. Un objectif supplémentaire est de simplifier l'interface entre l'opérateur et les différents dispositifs de contrôle qu'il utilise.

A cet effet, l'invention a pour objet un dispositif de contrôle du type précité, comprenant un premier terminal, mobile, et un deuxième terminal, lesdits terminaux étant distincts l'un de l'autre et adaptés pour communiquer l'un avec l'autre par des moyens de communication sans fils, le premier terminal intégrant le système de communication sans fils et le deuxième terminal incluant le calculateur principal et l'afficheur, le premier terminal étant adapté pour transférer les données lues au deuxième terminal via les moyens de communication sans fils.

L'invention est caractérisée en ce que :
- le premier terminal comprend un calculateur secondaire programmé pour effectuer un prétraitement des données lues et un dispositif de présentation d'une information synthétique à un utilisateur du premier terminal en fonction d'un résultat du prétraitement des données lues et en ce que ;
- le prétraitement des données lues comprend la recherche d'un signalement d'un dysfonctionnement de l'équipement embarqué dans les données lues, et le dispositif de présentation est adapté pour occuper un état correspondant à l'identification, par le calculateur secondaire, d'un signalement d'un dysfonctionnement de l'équipement embarqué dans les données lues.

Selon des modes de réalisation particuliers de l'invention, le dispositif de contrôle présente également l'une ou plusieurs des caractéristiques présentées dans les revendications 2 à 6.

L'invention a encore pour objet un système de collecte de taxe tel que défini à la revendication 7. Selon un mode de réalisation particulier de l'invention, ce système de collecte de taxe présente également les caractéristiques mentionnées à la revendication 8.

L'invention a également pour objet un procédé de contrôle des données portées par un équipement, embarqué à bord d'un véhicule, d'un système de collecte de taxe, comprenant les étapes suivantes :
- lecture à distance, par un premier terminal, mobile, de données portées par l'équipement embarqué,
- prétraitement, par le premier terminal, des données lues,
- présentation, par le premier terminal, d'une information synthétique à un utilisateur du premier terminal en fonction d'un résultat du prétraitement des données lues,
- transfert des données lues par voie aérienne, depuis le premier terminal vers un deuxième terminal,
- interprétation des données transférées par un calculateur du deuxième terminal, et
- affichage des données interprétées par un afficheur du deuxième terminal.

L'étape de prétraitement comprend une sous-étape de recherche d'un signalement d'un dysfonctionnement de l'équipement embarqué dans les données lues.

Selon des modes de réalisation particuliers de l'invention, le procédé de contrôle présente également l'une ou plusieurs des caractéristiques présentées dans les revendications 10 et 11.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue schématique d'un partie d'un système de collecte de taxes selon l'invention,
- la Figure 2 est une vue schématique d'un dispositif de contrôle manuel du système de collecte de la Figure 1, et
- la Figure 3 est un schéma illustrant un procédé de contrôle mis en oeuvre au moyen du système de collecte de la Figure 1.

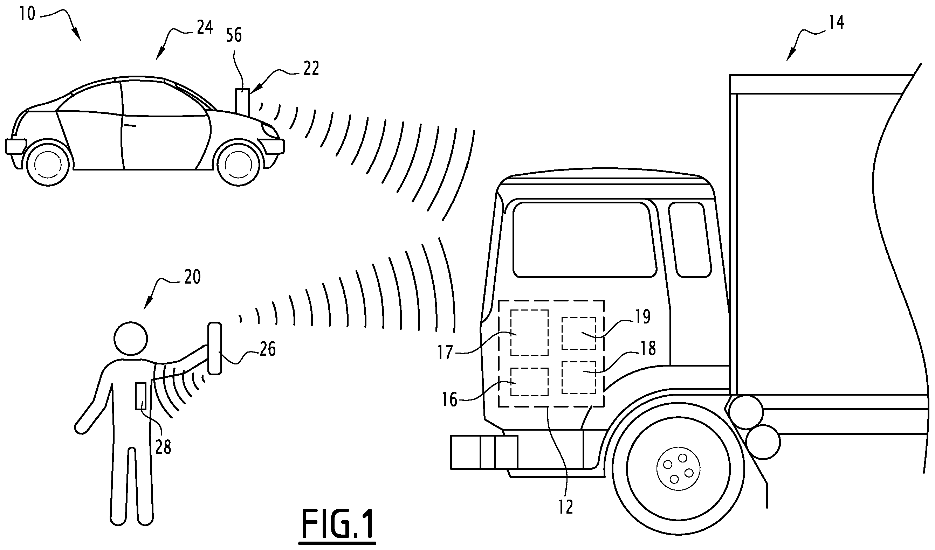

Le système de collecte de taxe 10, représenté sur la Figure 1, est destiné à collecter une taxe pour l'utilisation d'un réseau routier par des usagers de ce réseau.

Ce système de collecte 10 comprend un équipement 12 embarqué à bord d'un véhicule 14, par exemple un camion. De façon connue, cet équipement embarqué 12 comprend une mémoire 16 stockant un identifiant de l'équipement embarqué 12 et des informations relatives au véhicule 14, comme par exemple sa longueur, son nombre d'essieux, son poids total autorisé en charge (PTAC), son poids total roulant autorisé (PTRA), et sa classe d'émission suivant les normes européennes en la matière. Il comprend également un système 17 de communication sans fils, pour la transmission des informations relatives au véhicule 14 à des systèmes de contrôle de ces informations. De préférence, il comprend en outre un module de géolocalisation 18, générant des données de géolocalisation du véhicule 14, et un système 19 de transmission des données de géolocalisation et des informations relatives au véhicule 14 à un centre (non représenté) de calcul d'un montant de taxe dû par l'utilisateur du véhicule 14.

Le système de communication 17 est de préférence un système de communication dédiée à courte portée (mieux connu sous l'acronyme DSRC, de l'anglais « Dedicated Short Range Communication »), dont le protocole de communication est conforme aux normes ISO 14906, EN 15509 et ISO 12813. Le système de transmission 19 est de préférence un système de transmission de données par réseau de téléphonie mobile.

Le système de collecte de taxes 10 comprend également des systèmes de contrôle des informations relatives au véhicule 14 stockées dans la mémoire 16. Ces systèmes de contrôle comprennent notamment un dispositif de contrôle manuel 20. Ils comprennent également un dispositif de contrôle 22 embarqué à bord d'un véhicule de contrôle 24. De préférence, ils comprennent également des portiques et des bornes de contrôle automatique (non représentés) répartis le long du réseau routier.

Le dispositif de contrôle manuel 20 est adapté pour être manipulé par un opérateur à pied pour contrôler les équipements embarqués 12 à bord de véhicules 14, en particulier lorsque ces véhicules 14 sont à l'arrêt, par exemple sur le parking d'une aire de repos.

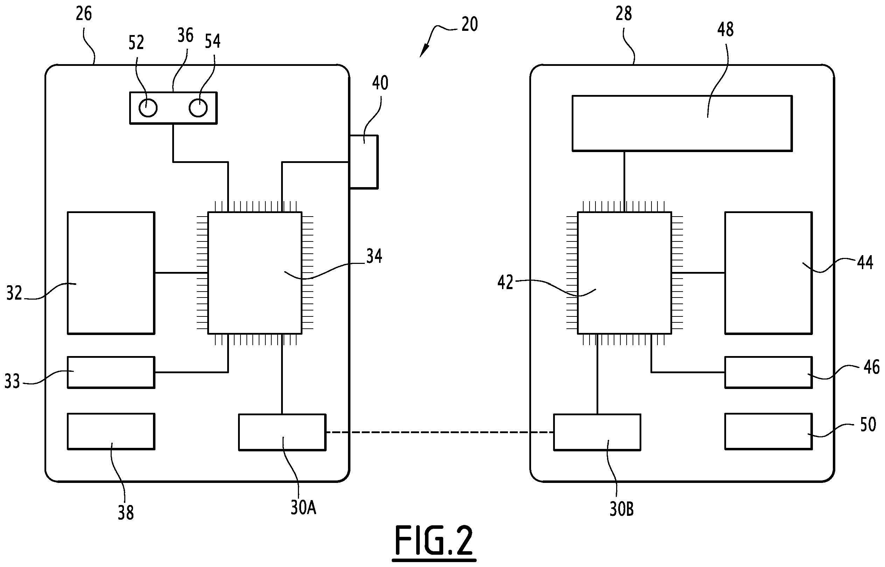

En référence à la Figure 2, le dispositif de contrôle manuel 20 comprend, selon l'invention, deux terminaux 26, 28. Un premier 26 desdits terminaux 26, 28 est un terminal mobile, c'est-à-dire adapté pour être porté à la main par l'opérateur ; il a à cet effet un poids inférieur à 250 grammes. Le deuxième terminal 28 est de préférence un ordiphone ; en variante, le deuxième terminal 28 est une tablette, un ordinateur portable, ou un ordinateur embarqué à bord du véhicule de contrôle 24. Les premier et deuxième terminaux 26, 28 sont adaptés pour communiquer l'un avec l'autre à distance ; à cet effet, ils comprennent des moyens de communication sans fils 30A, 30B complémentaires, par exemple des moyens de communication Bluetooth ou Wi-Fi.

Le premier terminal 26 comprend, outre les moyens de communication sans fils 30A, un système 32 de communication sans fils pour lire des données portées par l'équipement embarqué 12, une mémoire 33, un calculateur 34, un dispositif 36 de présentation d'une information synthétique à l'opérateur, une batterie 38 d'alimentation des moyens de communication 30a, du système de communication 32, de la mémoire 33, du calculateur 34 et du dispositif de présentation 36, et un organe 40, actionnable par l'opérateur, d'enclenchement de la lecture des données par le système de communication sans fils 32. Il est dépourvu d'afficheur.

Le deuxième terminal 28 comprend, outre les moyens de communication sans fils 30B, un calculateur 42, pour interpréter les données lues par le système 32, un afficheur 44, pour afficher les données interprétées, une mémoire 46, pour stocker les données interprétées, un module 48 de transmission par réseau de téléphonie mobile, pour la transmission des données interprétées, et, de préférence, une batterie 50 pour l'alimentation du calculateur 42, de l'afficheur 44, de la mémoire 46 et du module de transmission 48. Il est dépourvu de système de communication sans fils pour lire des données portées par l'équipement embarqué 12.

Le système de communication 32 est typiquement un système de communication dédiée à courte portée (mieux connu sous l'acronyme DSRC, de l'anglais « Dedicated Short Range Communication »), dont le protocole de communication est conforme aux normes ISO 14906, EN 15509 et ISO 12813. Ce système de communication 32 est compatible avec le système de communication 17 de l'équipement embarqué 12, de sorte que l'équipement embarqué 12 et le premier terminal 26 puissent s'échanger des données par voie aérienne.

La mémoire 33 du premier terminal 26 stocke une liste d'identifiants d'équipements embarqués 12 signalés comme n'étant pas en règle.

Le calculateur 42 du deuxième terminal 28 constitue un calculateur principal du dispositif de contrôle manuel 20, et le calculateur 34 du premier terminal 26 constitue un calculateur secondaire du dispositif de contrôle manuel 20.

Le calculateur secondaire 34 est programmé pour lire les informations relatives au véhicule 14 portées par l'équipement embarqué 12, c'est-à-dire pour aller chercher ces informations dans la mémoire 16 de l'équipement embarqué 12, via les systèmes de communication 17, 32, et pour rapatrier ces informations sur le premier terminal 26. Il est également programmé pour lire d'autres données portées par l'équipement embarqué 12, comme l'identifiant de l'équipement embarqué 12, ou d'éventuels signalements de dysfonctionnements émis par l'équipement embarqué 12.

Le calculateur secondaire 34 est également programmé pour effectuer un prétraitement des données lues. Ce prétraitement comprend la comparaison de l'identifiant de l'équipement embarqué 12 avec la liste d'identifiants stockée dans la mémoire 33, et la recherche d'un signalement de dysfonctionnement dans les données lues.

Le dispositif de présentation 36 est adapté pour présenter une information synthétique à l'opérateur du dispositif de contrôle 20 en fonction du résultat du prétraitement des données lues. A cet effet, le dispositif de présentation est adapté pour occuper trois états correspondant chacun, de façon biunivoque, à l'un des cas suivants :
- premier cas : identification de la présence de l'identifiant de l'équipement embarqué 12 dans la liste stockée dans la mémoire 33,
- deuxième cas : identification d'un signalement d'un dysfonctionnement de l'équipement embarqué 12 dans les données lues, et
- troisième cas : absence d'identification de la présence de l'identifiant de l'équipement embarqué 12 dans la liste stockée dans la mémoire 33 ou d'un signalement d'un dysfonctionnement de l'équipement embarqué 12 dans les données lues,
et le calculateur secondaire est programmé pour commander le changement d'état du dispositif de présentation 36 dans chacun des trois cas précités, de façon à ce que le dispositif de présentation 36 occupe l'état correspondant au cas rencontré.

En particulier, le dispositif de présentation 36 comprend deux voyants 52, 54, et il est adapté pour qu'un premier 52 desdits voyants 52, 54 soit allumé clignotant dans le premier cas et allumé fixe dans le deuxième cas, le deuxième voyant 54 étant allumé fixe dans le troisième cas. Typiquement, le premier voyant 52 est rouge et le deuxième voyant 54 est vert.

L'organe de commande 40 est par exemple un bouton-poussoir. Le calculateur secondaire 34 est programmé pour détecter son actionnement, et pour enclencher la lecture de l'équipement embarqué 12 lorsque l'organe de commande 40 est actionné brièvement.

Le calculateur secondaire 34 est également programmé pour télécharger des mises à jour de son logiciel et de la liste d'identifiants stockée dans la mémoire 33 depuis un serveur distant (non représenté), via le deuxième terminal 28, le module de transmission 48 faisant à cet effet office de module de connexion audit serveur distant.

Le calculateur secondaire 34 est en outre programmé pour transférer les données lues au deuxième terminal 28, via les moyens de communication 30A, 30B suite à une requête de l'opérateur consistant en un actionnement prolongé de l'organe de commande 40.

En variante, le calculateur principal 42 est programmé pour commander le transfert des données lues par le premier terminal 26 vers le deuxième terminal 28 sur requête de l'opérateur communiquée par les moyens d'interface homme-machine. A cet effet, le calculateur principal 42 est programmé pour envoyer une requête de transfert au calculateur secondaire 34, par l'intermédiaire des moyens de communication 30A, 30B, et le calculateur secondaire 34 est programmé pour, après réception de la requête de transfert, transférer les données lues au deuxième terminal 28, via les moyens de communication 30A, 30B.

Le calculateur principal 42 est également programmé pour interpréter les données lues par le premier terminal 26, c'est-à-dire pour les mettre en forme de façon à ce qu'elles soient lisibles par un être humain, typiquement en transformant des valeurs de bits en textes lisibles par l'opérateur.

Le calculateur principal 42 est de plus programmé pour commander l'affichage des données interprétées par l'afficheur 44, et la mémorisation des données lues dans la mémoire 46.

Le calculateur principal 42 est en outre programmé pour transférer les données lues vers un serveur distant (non représenté), via les moyens de transmission 48, sur requête de l'opérateur communiquée par les moyens d'interface homme-machine.

Les moyens d'interface homme-machine comprennent l'afficheur 44 et, optionnellement, des boutons poussoirs. L'afficheur 44 est typiquement un écran tactile.

Le dispositif de contrôle embarqué 22 comprend un terminal 56 embarqué à bord du véhicule 24, et le deuxième terminal 28. Le terminal embarqué 56 est identique au premier terminal 26, à la seule différence que le terminal embarqué 56 n'est pas un terminal mobile. Le calculateur principal 42 est programmé pour réaliser les mêmes opérations sur les données lues par le terminal embarqué 56 que celles réalisées sur les données lues par le premier terminal 26.

En variante, le terminal embarqué 56 dispose d'une connexion filaire avec le deuxième terminal 28.

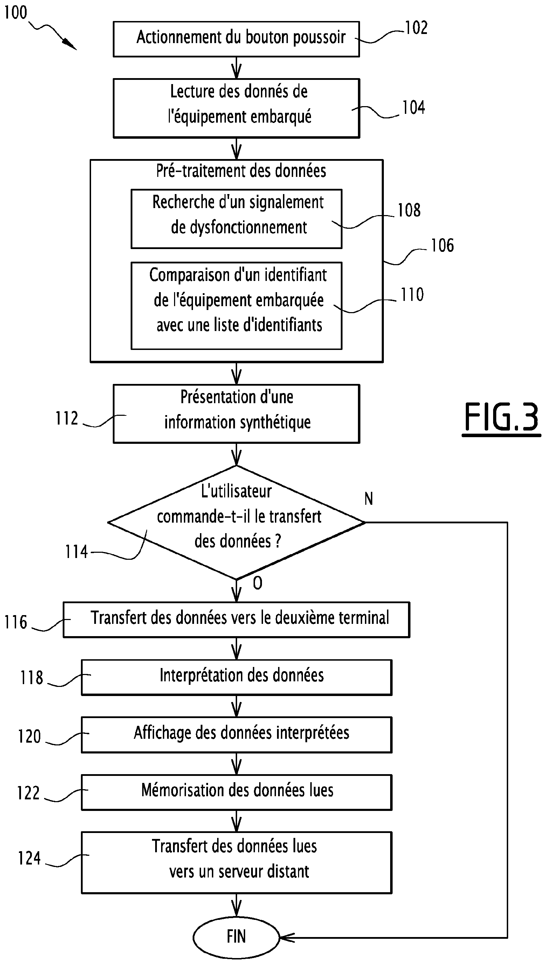

Un procédé 100 de contrôle de l'équipement embarqué 12 d'un véhicule 14 au moyen du dispositif de contrôle manuel 20 va maintenant être décrit, en référence à la Figure 3.

L'opérateur, équipé du premier terminal 26 se place tout d'abord à une distance suffisante du véhicule 14 pour permettre l'établissement d'une communication entre les systèmes de communication 17, 32 du premier terminal 26 et de l'équipement embarqué 12.

Une fois l'opérateur positionné à une distance convenable, il débute le procédé de contrôle 100 en actionnant brièvement le bouton-poussoir 40.

L'actionnement 102 du bouton-poussoir 40 est détecté par le calculateur secondaire 34, qui enclenche une lecture à distance 104 des données de l'équipement embarqué 12 par le premier terminal 26. Lors de cette étape de lecture 104, les informations relatives au véhicule 14, l'identifiant de l'équipement embarqué 12 et les éventuels signalements de dysfonctionnements de l'équipement embarqué 12 sont récupérées et transférées au premier terminal 26.

Puis, lors d'une étape de prétraitement 106, le calculateur secondaire 34 effectue le prétraitement des données lues. Cette étape de prétraitement 106 comprend une première sous-étape 108 de recherche d'un signalement de dysfonctionnement, au cours de laquelle le calculateur secondaire 34 recherche un signalement de dysfonctionnement dans les données lues, et une deuxième sous-étape 110 de comparaison de l'identifiant de l'équipement embarqué 12 avec la liste d'identifiants stockée dans la mémoire 33.

Enfin, lors d'une étape 112, le calculateur secondaire 34 commande le changement d'état du dispositif de présentation 36 de sorte à ce qu'il occupe l'état correspondant au résultat du prétraitement des données. En d'autres termes, le calculateur secondaire 34 commande l'allumage :
- du premier voyant 52 de façon à ce que ce voyant 52 reste fixe, s'il a identifié un signalement de dysfonctionnement dans les données lues,
- du premier voyant 52 de façon à ce que ce voyant 52 clignote, s'il a identifié que l'identifiant de l'équipement embarqué 12 était présent dans la liste stockée dans la mémoire 33, et
- du deuxième voyant 54 de façon à ce que ce voyant 54 reste fixe, si aucun signal de dysfonctionnement n'a été identifié et l'identifiant de l'équipement embarqué 12 était absent de la liste stockée dans la mémoire 33.

L'étape 112 est suivie d'une étape 114 d'attente d'un ordre de transfert de données. En l'absence d'émission d'un tel ordre par l'opérateur, par exemple par actionnement prolongé de l'organe de commande 40 ou par l'intermédiaire des moyens d'interface homme-machine du deuxième terminal 28, le procédé 100 se finit et les données sont effacées du premier terminal 26.

Si au contraire l'opérateur commande le transfert des données lues, par l'intermédiaire de l'interface homme-machine du deuxième terminal 28, ces données sont, lors d'une étape 116, transférées au deuxième terminal 28 par voie aérienne, depuis le premier terminal 26 vers le deuxième terminal 28.

Les données transférées sont ensuite interprétées, lors d'une étape 118, par le calculateur principal 42.

Les données interprétées sont ensuite affichées sur l'afficheur 44, lors d'une étape 120, puis les données lues sont mémorisées dans la mémoire 46, lors d'une étape 122.

Enfin, lorsque l'opérateur en donne l'ordre, les données mémorisées dans la mémoire 46 sont transférées à un serveur distant, lors d'une étape 124.

Grâce à l'invention décrite ci-dessus, l'opérateur ne doit manipuler que le seul premier terminal 26. Ce premier terminal 26 étant dépourvu d'afficheur, et le calculateur secondaire ne nécessitant qu'une puissance de calcul réduite, il est possible de réaliser un terminal léger et compact, ce qui en rend la manipulation particulièrement aisée et réduit les risques d'occurrence de problèmes physiques liés à une utilisation prolongée du dispositif de contrôle manuel 20. Le deuxième terminal 28 peut quant à lui être laissé dans une poche de l'opérateur, voire dans le véhicule 24, ce qui rend possible le recours à un calculateur principal puissant sans gêner la manipulation du dispositif de contrôle manuel 20.

En outre, le dispositif de contrôle manuel 20 est évolutif. Il est en effet possible de le doter aisément de nouvelles fonctions en remplaçant le deuxième terminal 28 par un terminal du commerce sur lequel on aura préalablement installé une application appropriée. On pourra notamment utiliser en remplacement du deuxième terminal 28 le nouvel ordiphone de l'opérateur, ce qui permettra de réaliser une économie significative dans le coût de remplacement du deuxième terminal. Le premier terminal 26, qui constitue le coeur du dispositif et est la partie la plus coûteuse, n'aura pas besoin d'être remplacé ni même modifié.

De plus, l'opérateur peut être dispensé d'avoir à consulter le deuxième terminal 28 grâce à l'information synthétique que lui communique le premier terminal. Il est ainsi possible d'effectuer un contrôle rapide des véhicules.

Enfin, le deuxième terminal 28 étant commun aux dispositifs de contrôle manuel et embarqué 20, 22, l'opérateur de ces dispositifs 20, 22 dispose d'une seule interface pour consulter les données collectées suite à des contrôles effectués aussi bien avec le dispositif de contrôle manuel 20 qu'avec le dispositif de contrôle embarqué 22. L'opérateur n'a donc pas besoin de se familiariser avec plusieurs interfaces, et toutes les données relatives aux différents contrôles qu'il a effectués sont regroupées en un même emplacement, ce qui rend leur consultation plus aisée.

## Revendications

1. Dispositif de contrôle (20) pour contrôler les données portées par un équipement (12), embarqué à bord d'un véhicule (14), d'un système de collecte de taxe (10), le dispositif de contrôle (20) comprenant un système de communication sans fils (32) pour lire des données portées par l'équipement embarqué (12), un calculateur principal (42) pour interpréter les données lues, et un afficheur (44) pour afficher les données interprétées,
le dispositif de contrôle (20) comprenant un premier terminal (26), adapté pour être porté à la main par un opérateur, et un deuxième terminal (28), lesdits terminaux (26, 28) étant distincts l'un de l'autre et adaptés pour communiquer l'un avec l'autre par des moyens de communication sans fils (30A, 30B), le premier terminal (26) intégrant le système de communication sans fils (32) et le deuxième terminal (28) incluant le calculateur principal (42) et l'afficheur (44), le premier terminal (26) étant adapté pour transférer les données lues au deuxième terminal (28) via les moyens de communication sans fils (30A, 30B)
**caractérisé en ce que** le premier terminal (26) comprend un calculateur secondaire (34) programmé pour effectuer un prétraitement des données lues et un dispositif (36) de présentation d'une information synthétique à un utilisateur du premier terminal (26) en fonction d'un résultat du prétraitement des données lues, le prétraitement des données lues comprenant la recherche d'un signalement d'un dysfonctionnement de l'équipement embarqué (12) dans les données lues, et le dispositif de présentation (36) étant adapté pour occuper un état correspondant à l'identification, par le calculateur secondaire (34), d'un signalement d'un dysfonctionnement de l'équipement embarqué (12) dans les données lues.

2. Dispositif de contrôle (20) selon la revendication 1, dans lequel le prétraitement des données lues comprend la comparaison d'un identifiant de l'équipement embarqué (12) avec une liste d'identifiants stockée dans une mémoire (33) du premier terminal (26), et le dispositif de présentation (36) est adapté pour occuper un état correspondant à l'identification, par le calculateur secondaire (34), de la présence de l'identifiant de l'équipement embarqué (12) dans la liste.

3. Dispositif de contrôle (20) selon la revendication 2, dans lequel le dispositif de présentation (36) est adapté pour occuper un état correspondant à l'absence d'identification, par le calculateur secondaire (34), d'un signalement d'un dysfonctionnement de l'équipement embarqué (12) dans les données lues ou de la présence de l'identifiant de l'équipement embarqué (12) dans la liste.

4. Dispositif de contrôle (20) selon l'une quelconque des revendications précédentes, dans lequel le deuxième terminal (28) comprend un module (48) de connexion à un serveur distant et le calculateur secondaire (34) est programmé pour télécharger des mises à jour depuis ledit serveur distant, via le deuxième terminal (28), et pour installer lesdites mises à jour.

5. Dispositif de contrôle (20) selon l'une quelconque des revendications précédentes, dans lequel le système de communication sans fils (32) est un système de communication dédiée à courte portée, et les moyens de communication sans fils (30A, 30B) comprennent un système de communication Bluetooth ou Wi-Fi.

6. Dispositif de contrôle (20) selon l'une quelconque des revendications précédentes, dans lequel le premier terminal (26) comprend un organe (40), actionnable par un utilisateur, d'enclenchement de la lecture des données par le système de communication sans fils (32).

7. Système de collecte de taxe (10) comprenant un équipement (12) embarqué à bord d'un véhicule (14) et un dispositif de contrôle (20) selon l'une quelconque des revendications précédentes pour contrôler des données portées par ledit équipement embarqué (12).

8. Système de collecte de taxe (10) selon la revendication 7, comprenant un terminal (56) embarqué à bord d'un véhicule (24), ledit terminal embarqué (56) comportant un système de communication sans fils pour lire les données portées par l'équipement embarqué (12), et des moyens de communication avec le deuxième terminal (28) pour le transfert des données lues au deuxième terminal (28), le calculateur principal (42) étant programmé pour interpréter les données lues par le terminal embarqué (56), et l'afficheur (44) étant adapté pour afficher ces données après leur interprétation.

9. Procédé (100) de contrôle des données portées par un équipement (12), embarqué à bord d'un véhicule (14), d'un système de collecte de taxe (10), **caractérisé en ce qu'**il comprend les étapes suivantes :
- lecture à distance (104), par un premier terminal (26) adapté pour être porté à la main par un opérateur, de données portées par l'équipement embarqué (12),
- prétraitement (106), par le premier terminal (26), des données lues,
- présentation (112), par le premier terminal (26), d'une information synthétique à un utilisateur du premier terminal (26) en fonction d'un résultat du prétraitement des données lues,
- transfert (116) des données lues par voie aérienne, depuis le premier terminal (26) vers un deuxième terminal (28),
- interprétation (118) des données transférées par un calculateur (42) du deuxième terminal (26), et
- affichage (120) des données interprétées par un afficheur (44) du deuxième terminal (28),
l'étape de prétraitement (106) comprenant une sous-étape (108) de recherche d'un signalement d'un dysfonctionnement de l'équipement embarqué (12) dans les données lues.

10. Procédé de contrôle (100) selon la revendication 9, dans lequel l'étape de prétraitement (106) comprend également une sous-étape (110) de comparaison d'un identifiant de l'équipement embarqué (12) avec une liste d'identifiants stockée dans une mémoire (33) du premier terminal (26).

11. Procédé de contrôle (100) selon la revendication 9 ou 10, comprenant une étape (102) d'enclenchement de la lecture des données par actionnement d'un organe (40) du premier terminal (26) par un utilisateur.

## Patentansprüche

1. Kontrollvorrichtung (20) zum Kontrollieren der von einem Gerät (12) an Bord eines Fahrzeugs (14) getragenen Daten eines Systems zum Sammeln von Gebühren (10), wobei die Kontrollvorrichtung (20) ein Drahtlos-Kommunikationssystem (32) zum Lesen von dem Gerät an Bord (12) getragenen Daten, einen Hauptrechner (42) zum Interpretieren der gelesenen Daten und eine Anzeige (44) zum Anzeigen der interpretierten Daten aufweist,
wobei die Kontrollvorrichtung (20) ein erstes Endgerät (26), eingerichtet, um in der Hand eines Benutzers getragen zu werden, und ein zweites Endgerät (28) aufweist, wobei die Endgeräte (26, 29) voneinander unterschiedlich sind und eingerichtet sind, mittels Drahtlos-Kommunikationsmittel (30A, 30B) miteinander zu kommunizieren, wobei das erste Endgerät (26) das Drahtlos-Kommunikationssystem (32) integriert und das zweite Endgerät (28) den Hauptrechner (42) und die Anzeige (44) aufweist, wobei das erste Endgerät (26) eingerichtet ist zum Übertragen der gelesenen Daten an das zweite Endgerät (28) über die Drahtlos-Kommunikationsmittel (30A, 30B)
dadurch charakterisiert, dass das erste Endgerät (26) einen sekundären Rechner (34), der dazu programmiert ist, eine Vorverarbeitung der gelesenen Daten durchzuführen, und eine Vorrichtung (36) zum Präsentieren einer synthetischen Information an einen Benutzer des ersten Endgeräts (26) in Abhängigkeit eines Ergebnisses der Vorverarbeitung der gelesenen Daten aufweist, wobei die Vorverarbeitung der gelesenen Daten die Suche einer Signalisierung einer Fehlfunktion des Geräts an Bord (12) in den gelesenen Daten aufweist und die Vorrichtung (36) zum Präsentieren zum Einnehmen eines Zustands, der einer Identifizierung durch den sekundären Rechner (34) einer Signalisierung einer Fehlfunktion des Geräts an Bord (12) in den gelesenen Daten entspricht, eingerichtet ist.

2. Kontrollvorrichtung (20) gemäß Anspruch 1, in dem die Vorverarbeitung der gelesenen Daten den Vergleich einer Identifikation des Geräts an Bord (12) mit einer in einem Speicher (33) des ersten Endgeräts (26) gespeicherten Liste von Identifikationen aufweist und die Vorrichtung zur Präsentation (36) eingerichtet ist, einen Zustand einzunehmen, der der Identifizierung durch den sekundären Rechner (34) des Vorhandenseins der Identifikation des Geräts an Bord (12) in der Liste entspricht.

3. Kontrollvorrichtung (20) gemäß dem Anspruch 2, in dem die Vorrichtung zur Präsentation (36) eingerichtet ist, einen Zustand einzunehmen, der dem Fehlen der Identifizierung durch den sekundären Rechner (34) einer Signalisierung einer Fehlfunktion des Geräts an Bord (12) in den gelesenen Daten oder eines Vorhandenseins der Identifikation des Geräts an Bord (12) in der Liste entspricht.

4. Kontrollvorrichtung (20) gemäß einem der vorhergehenden Ansprüche, in dem das zweite Endgerät (28) ein Modul (48) zum Verbinden mit einem entfernten Server aufweist und der sekundäre Rechner (34) programmiert ist, Aktualisierungen von dem entfernten Server über das zweite Endgerät (28) herunterzuladen und die Aktualisierungen zu installieren.

5. Kontrollvorrichtung (20) gemäß einem der vorhergehenden Ansprüche, in dem das Drahtlos-Kommunikationssystem (32) ein für kurze Distanz dediziertes Kommunikationssystem ist und die Drahtlos-Kommunikationsmittel (30A, 30B) ein Bluetooth- oder Wi-Fi-Kommunikationssystem aufweisen.

6. Kontrollvorrichtung (20) gemäß einem der vorhergehenden Ansprüche, in dem das erste Endgerät (26) eine Einheit (40), betätigbar durch einen Benutzer, zum Einschalten des Lesens der Daten durch das Drahtlos-Kommunikationssystem (32) aufweist.

7. System zum Einsammeln von Gebühren (10) aufweisend ein Gerät (12) an Bord eines Fahrzeugs (14) und eine Kontrollvorrichtung (20) gemäß einem der vorhergehenden Ansprüche zum Kontrollieren der von dem Gerät an Bord (12) getragenen Daten.

8. System zum Einsammeln von Gebühren (10) gemäß Anspruch 7, aufweisend ein Endgerät (56) an Bord eines Fahrzeugs (24), wobei das Endgerät an Bord (56) ein Drahtlos-Kommunikationssystem zum Lesen der von dem Gerät an Bord (12) getragenen Daten und Mittel zur Kommunikation mit dem zweiten Endgerät (28) für die Übertragung der gelesenen Daten an das zweite Endgerät (28) aufweist, wobei der Hauptrechner (42) dazu programmiert ist, die durch das Endgerät an Bord (56) gelesenen Daten zu interpretieren und die Anzeige (44) eingerichtet ist, diese Daten nach ihrer Interpretation anzuzeigen.

9. Verfahren (100) zum Kontrollieren der von einem Gerät (12) an Bord eines Fahrzeugs (14) getragenen Daten eines Systems zum Einsammeln von Gebühren (10), dadurch charakterisiert, dass es die folgenden Schritte aufweist:
- Lesen, über die Distanz, (104) durch ein erstes Endgerät (26), eingerichtet, um in der Hand eines Benutzers getragen zu werden, von von dem Gerät an Bord (12) getragenen Daten,
- Vorverarbeitung (106), durch das erste Endgerät (26), der gelesenen Daten,
- Präsentation (112), durch das erste Endgerät (26), einer synthetischen Information, einem Benutzer des ersten Endgeräts (26) in Abhängigkeit eines Ergebnisses der Vorverarbeitung der gelesenen Daten,
- Übertragung (116) der gelesenen Daten über den Luftweg von dem ersten Endgerät (26) zu dem zweiten Endgerät (28),
- Interpretation (118) der übertragenen Daten durch einen Rechner (42) des zweiten Endgeräts (26) und
- Anzeige (120) der interpretierten Daten durch eine Anzeige (44) des zweiten Endgeräts (28),
wobei der Schritt der Vorverarbeitung (106) einen Unterschritt (108) zur Suche einer Signalisierung einer Fehlfunktion des Geräts an Bord (12) in den gelesenen Daten aufweist.

10. Verfahren zum Kontrollieren (100) gemäß dem Anspruch 9, in dem der Schritt der Vorverarbeitung (106) auch einen Unterschritt (110) zum Vergleichen einer Identifikation des Geräts an Bord (12) mit einer in einem Speicher (33) des ersten Endgeräts (26) gespeicherten Liste von Identifikationen aufweist.

11. Verfahren zum Kontrollieren (100) gemäß dem Anspruch 9 oder 10, aufweisend einen Schritt (102) zum Einschalten des Lesens der Daten durch Betätigung einer Einheit (40) des ersten Endgeräts (26) durch den Benutzer.

## Claims

1. A control device (20) for controlling the data carried by an item of equipment (12), onboard a vehicle (14), of a fee collection system (10), the control device (20) comprising a wireless communication system (32) to read the data carried by the onboard item of equipment (12), a main computer (42) to interpret the read data, and a viewer (44) to display the interpreted data,
the control device (20) comprising a first mobile terminal (26), suitable for being carried in an operator's hand, and a second terminal (28), said terminals (26, 28) being separate from one another and suitable for communicating with one another by wireless communication means (30A, 30B), the first terminal (26) incorporating the wireless communication system (32) and the second terminal (28) including the main computer (42) and the viewer (44), the first terminal (26) being suitable for transferring the read data to the second terminal (28) via the wireless communication means (30A, 30B),
**characterized in that** the first terminal (26) comprises a secondary computer (34) programmed to perform preprocessing of the read data and a device (36) for presenting synthetic information to a user of the first terminal (26) based on a result of the preprocessing of the read data, the preprocessing of the read data comprising searching for a signal of a malfunction of the onboard equipment (12) in the read data, and the presentation device (36) being suitable for occupying a state corresponding to the identification, by the secondary computer (34), of a signal of a malfunction of the onboard equipment (12) in the read data.

2. The control device (20) according to claim 1, wherein the preprocessing of the read data comprises comparing an identifier of the onboard item of equipment (12) with a list of identifiers stored in a memory (33) of the first terminal (26), and the presentation device (36) is suitable for occupying a state corresponding to the identification, by the secondary computer (34), of the presence of the identifier of the onboard item of equipment (12) in the list.

3. The control device (20) according to claim 2, wherein the presentation device (36) is suitable for occupying a state corresponding to the lack of identification, by the secondary computer (34), of a signal of a malfunction of the onboard item of equipment (12) in the read data or of the presence of the identifier of the onboard item of equipment (12) in the list.

4. The control device (20) according to any one of the preceding claims, wherein the second terminal (28) comprises a module (48) for connecting to a remote server and the secondary computer (34) is programmed to download updates from said remote server, via the second terminal (28), and to install said updates.

5. The control device (20) according to any one of the preceding claims, wherein the wireless communication system (32) is a dedicated short-range communication system, and the wireless communication means (30A, 30B) comprise a Bluetooth or Wi-Fi communication system.

6. The control device (20) according to any one of the preceding claims, wherein the first terminal (26) comprises a member (40), able to be actuated by a user, for initiating the reading of data by the wireless communication system (32).

7. A fee collection system (10) comprising an onboard item of equipment (12) of a vehicle (14) and a control device (20) according to any one of the preceding claims to control the data carried by said onboard item of equipment (12).

8. The fee collection system (10) according to claim 7, comprising a terminal (56) onboard a vehicle (24), said onboard terminal (56) including a wireless communication system to read the data carried by the onboard item of equipment (12), and means for communicating with the second terminal (28) to transfer the read data to the second terminal (28), the main computer (42) being programmed to interpret the data read by the onboard terminal (56), and the viewer (44) being suitable for displaying this data after it has been interpreted.

9. A method (100) for controlling data carried by an item of equipment (12), onboard a vehicle (14), of a fee collection system (10), **characterized in that** it comprises the following steps:
- remote reading (104), by a first mobile terminal (26) able to be carried in an operator's hand, of data carried by the onboard item of equipment (12),
- preprocessing (106), by the first terminal (26), of the read data,
- presentation (112), by the first terminal (26), of synthetic information to a user of the first terminal (26) based on a result of the preprocessing of the read data,
- transfer (116) of the read data aerially, from the first terminal (26) to a second terminal (28),
- interpretation (118) of the transferred data by a computer (42) of the second terminal (26), and
- display (120) of the interpreted data by a viewer (44) of the second terminal (28),
the preprocessing step (106) comprising a sub-step (108) for looking for a malfunction signal of the onboard item of equipment (12) in the read data.

10. The control method (100) according to claim 9, wherein the preprocessing step (106) also comprises a sub-step (110) for comparing an identifier of the onboard item of equipment (12) with a list of identifiers stored in a memory (33) of the first terminal (26).

11. The control method (100) according to claim 9 or 10, comprising a step (102) for initiating the reading of the data by actuation of a member (40) of the first terminal (26) by a user.
